# DEMANDE DE BREVET EUROPEEN

(11) **EP 0 575 679 A1**
(43) Date de publication de la demande: **29.12.1993**
(21) Numéro de dépôt: 92401812.0
(22) Date de dépôt: 26.06.1992
(51) Int. Cl.: C08J 7/16, C08F 255/02

(54) **Utilisation des groupements amine obtenus sur un matériau polymère par un traitement électrique sous atmosphère d'azote pour accélérer une réaction de greffage**

(71) Demandeur: Centre Technique Industriel dit: INSTITUT TEXTILE DE FRANCE, F-92223 Bagneux Cédex (FR)
(72) Inventeur: Demuth, Odile, 69130 Ecully (FR); Brosse, Jean-Claude, 72160 Connerre (FR); Wattiez, Daniel, 68250 Rouffac (FR); Poncin-Epaillard, Fabienne, 7200 Le Mans (FR); Maguin, Jacques, 69005 LYON (FR); Chevet, Bruno, 72100 Le Mans (FR)
(74) Mandataire: Hennion, Jean-Claude

(57) **Abrégé**

Selon l'invention on utilise les groupements amine créés à la surface d'un matériau polymère, par exemple un film de polypropylène, par un traitement électrique, notamment un plasma froid, sous atmosphère d'azote dans le but d'accélérer le greffage dudit matériau polymère par imprégnation de celui-ci par un bain contenant un monomère insaturé du type vinylique comportant un groupement carbonyle en a de la double liaison vinylique, par exemple un monomère acrylique.

## Description

La présente invention concerne le greffage de matériaux polymères, par exemple de film de polypropylène ou polyester, par un monomère insaturé, notamment l'acide acrylique. Elle concerne plus précisément une technique de greffage qui comporte une première étape d'activation de la surface du matériau polymère à greffer, apte à créer des radicaux libres à la surface dudit matériau, puis une seconde étape au cours de laquelle le matériau activé est mis en contact avec le monomère insaturé à greffer.

La technique précitée dite de postgreffage est bien connue, en particulier dans le traitement des matériaux textiles, pour leur conférer des propriétés complémentaires apportées par les greffons de manière permanente. Il s'agit par exemple dans le document EP 0 299 808 de donner au matériau textile un caractère hydrofuge.

Les modes d'activation sont très nombreux par exemple action de l'ozone, du sulfate d'ammonium dans le document EP.0 299 808, irradiation sous atmosphère inerte dans le document US.3.912,499.

L'activation peut être aussi réalisée par des traitements électriques : décharge couronne ou plasma. Toutefois ce type de traitement comporte une limitation importante. L'action du traitement électrique se traduit par la création de radicaux libres à la surface du matériau polymère , mais aussi par des réactions parasites et notamment une certaine dégradation de la structure macromoléculaire du matériau et des réactions de réticulation qui modifient les caractéristiques initiales du matériau. De ce fait si l'on veut éviter une détérioration du matériau provoquée par ces réactions parasites, on obtient nécessairement un taux de greffage qui est faible. De plus la cinétique de greffage est lente.

Le but que s'est fixé le demandeur est de pallier l'inconvénient constaté en obtenant un taux de greffage plus important pour un temps d'activation plus court pour au moins certains types de monomères de greffage couramment utilisés.

Ce but est parfaitement atteint selon l'invention pour le greffage d'un matériau polymère par imprégnation de celui-ci par un bain contenant un monomère insaturé du type vinylique comportant un groupement carbonyle en a de la double liaison vinylique, en créant à la surface dudit matériau des groupements amines par un traitement d'activation préalable au greffage consistant en un traitement électrique sous atmosphère d'azote. Le traitement électrique d'activation, lorsqu'il est réalisé sous atmosphère d'azote, conduit à la création en surface du matériau polymère non seulement des radicaux libres permettant le développement de la réaction de greffage mais aussi des groupements amine .

Jusqu'à ce jour la présence des groupements amine , comme d'ailleurs celle des groupements carbonyles ou carboxyles obtenus lors du traitement électrique sous d'autres atmosphères, était mise à profit pour améliorer la mouillabilité du matériau polymère.

C'est le mérite de l'invention que d'avoir découvert que la présence des groupements amine procure un effet technique nouveau lorsque le matériau ainsi traité électriquement est soumis à une opération de greffage par imprégnation à l'aide d'un bain contenant un certain type de monomère à savoir un monomère insaturé acrylique ayant un groupement carbonyle en a de la double liaison vinylique. Cet effet technique nouveau consiste dans l'accélération de la cinétique de greffage : au démarrage de la réaction de greffage, le taux de greffage est plus important et il y a une relation directe entre le taux de greffage et la concentration des groupements amine créés à la surface du matériau polymère lors du traitement électrique. On pourrait tenter d'expliquer ce phénomène en supposant que le matériau polymére étant insoluble dans le bain d'imprégnation contenant le monomère, les groupements amine créés à la surface du matériau par le traitement électrique sous atmosphère d'azote agissent comme agent transfert et aident les monomères à diffuser vers les sites radicalaires disponibles à la surface du polymère, ce qui conduit à un meilleur amorçage et à une meilleure propagation de la réaction de greffage.

De plus le groupement carbonyle en a de la double liaison vinylique tendrait à former une liaison hydrogène avec le groupement amine fixé sur la surface du polymère, ce qui contribuerait à rapprocher la double liaison vinylique des sites radicalaires présents sur ladite surface.

Bien qu'ils ne constituent pas des sites radicalaires participant à la réaction de greffage, les groupements amine constitueraient des sites relais propres à accélérer l'amorçage et la propagation de cette réaction.

Le traitement électrique, permettant de créer à la surface du matériau polymére des sites radicalaires et des groupements amine , consiste notamment en un traitement, sous atmosphère d'azote, par plasma froid; le plasma froid est un milieu peu ionisé en fort déséquilibre thermodynamique, qui est obtenu par traitement électrique avec ou sans électrodes, dans un gaz sous faible pression, inférieure à 100 mbar, par exemple dans des décharges électriques, des décharges micro-onde ou haute fréquence.

De préférence le monomère insaturé ayant un groupement carbonyle en a de la double liaison vinylique est un monomère acrylique, par exemple l'acide acrylique, en solution aqueuse diluée.

De préférence la réaction de greffage dans ce dernier cas se déroule à une température comprise entre 70 _{°} et 95 _{°} C pendant des temps compris entre 24 et 48 heures.

De préférence le traitement électrique est réalisé dans les conditions suivantes : puissance de la décharge de 30 à 100 W, durée de l'exposition du matériau polymère placé dans la partie visible du plasma de 1,5 à 3 mn.

De préférence le matériau polymère est un polypropylène ou un polyester, par exemple sous forme d'un film.

L'invention sera mieux comprise à la lecture de la description qui va être faite d'un exemple de greffage d'un film de polypropylène par plasma froid sous atmosphère d'azote à l'aide d'un monomère acide acrylique, illustré par le dessin annexé dans lequel :

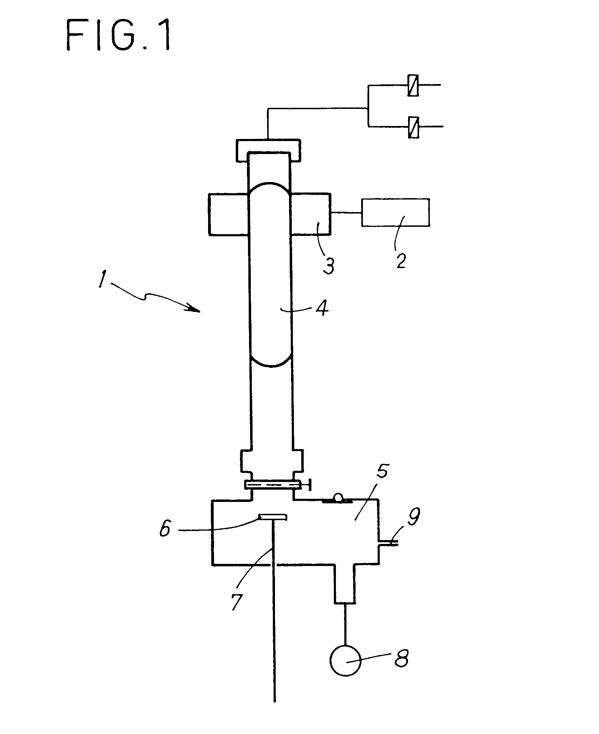

La figure 1 est une vue schématique de l'installation de traitement par plasma micro-ondes,
La figure 2 est un diagramme sous forme de deux courbes (A),(B) montrant l'évolution de la création des groupements amine et des sites radicalaires créés à la surface du polypropylène en fonction du temps d'activation,
La figure 3 est un diagramme sous forme d'une courbe (C) montrant l'évolution du taux de greffage en fonction du temps d'activation.

L'installation 1 permettant de créer un plasma micro-ondes est connue par ailleurs et ne sera pas décrite dans tous ses détails. L'installation 1 décrite ici est une installation de laboratoire permettant de traiter des échantillons de petites dimensions. Elle comprend un générateur 2 micro-ondes, travaillant à une fréquence de 433 MHz, couplé à un surfatron 3. La puissance d'excitation peut varier de 0 à 250 W. Elle comprend aussi un réacteur 4 qui est un cylindre de quartz de 500 mm de long et de 76 mm de diamètre. Le réacteur est placé au-dessus d'une chambre 5, servant à l'introduction de l'échantillon à traiter 6. Le support 7 d'échantillon peut être déplacé dans la zone de plasma ou à l'extérieur de celle-ci. L'installation 1 comporte aussi un système de pompage 8, permettant de faire varier le vide à l'intérieur du réacteur 4. La chambre 5 est raccordée à une alimentation en azote 9, dont le débit est contrôlé.

L'échantillon placé sur le support 7 est un film de polypropylène de 15 cm^{2 .} Il s'agit d'un polypropylène isotactique et semi-cristallin ayant une masse moléculaire moyenne de 50.000 et un degré de polymérisation moyen de 1.200. Le film a une épaisseur de 100 micromètres environ ; il est obtenu par extrusion et sans additif.

Les conditions de traitement sont les suivantes

Puissance incidente Pi = 50 W, puissance réfléchie Pr = 0,02 W, débit d'azote DN₂ = 20 cm³/mn, la longueur du plasma de 13 cm, et la distance entre le fond du surfatron et la surface de l'échantillon de 5 cm. Différentes mesures ont été effectuées dans ces conditions en faisant varier le temps d'activation de 1 à 12 mn, et selon les modalités suivantes :
- pompage jusqu'à 10-⁵ mbar pendant 30 mn
- introduction de l'azote pendant 5 mn,
- création du plasma pendant 5 mn
- fermeture de la vanne 10, introduction de l'échantillon 6 dans la chambre 5,
- pompage jusqu'à 10-² mbar pendant 2,5 mn
- ouverture de la vanne 10
- pompage jusqu'à 10-⁵ mbar pendant 7,5 mn
- création du plasma pendant le temps T de l'essai.

La présence des radicaux libres a été mesurée en utilisant comme réactif le 2,2 - Diphényl-1- picrylhydrazyl (DPPH, Aldrich) selon une méthode déjà décrite dans Eur. Polym. Journal 26(8), page 333 (1990) .

La présence des groupements amine a été mesurée suivant la méthode dénommée R.E Allred Proceed ayant fait l'objet d'une conférence au ACS Symposium Composites , Interfaces en mars 1983 à Seattle.

L'échantillon 6 traité sous plasma d'azote est plongé dans une solution d'acide acrylique à 5 % en poids dans le 2- butanol. Cette solution est chauffée à 95 pendant 48 heures. L'acide homo- polyacrylique est séparé de la partie greffée à l'aide d'un appareil d'extraction du type soxhlet durant 2 jours.

Le taux de greffage est mesuré par infra-rouge et par scintigraphie.

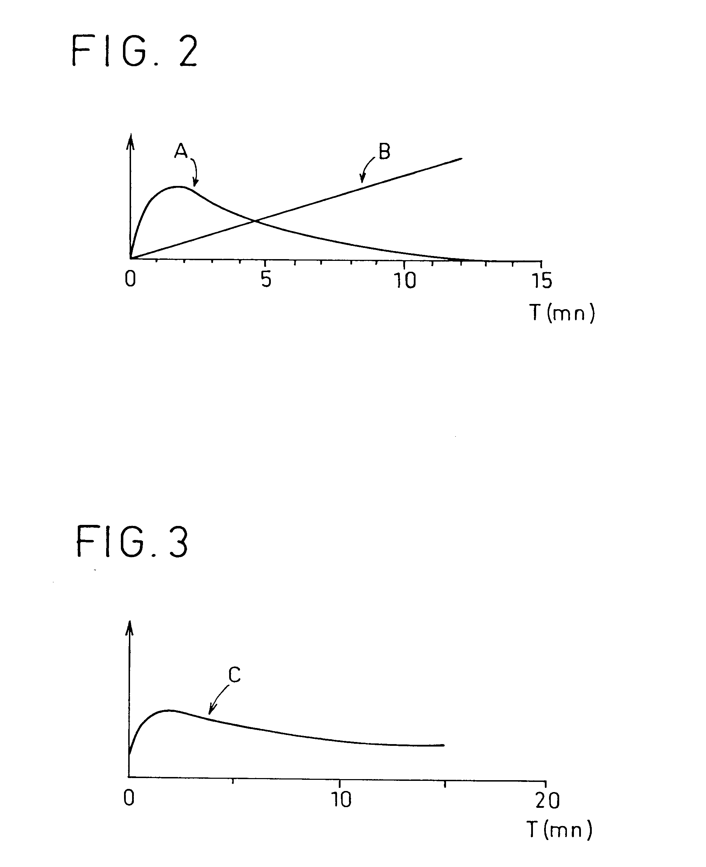

De l'examen de la figure 2, il ressort que la création des groupements amine (A) intervient rapidement pour décroître après quelques minutes tandis que celle des sites radicalaires (B) est directement proportionnelle au temps.

Toutes les études menées jusqu'à présent sur l'évolution du taux de greffage en fonction du temps d'activation font état d'une dépendance linéaire entre le taux de greffage et la quantité de radicaux libres créés, accessibles au monomères.

Ces études concernent notamment le greffage de l'acrylamide sur du polypropylène et sur du polyéthylène activé par un plasma d'argon et le greffage de l'acrylamide sur du polypropylène activé par un rayonnement ultra-violet.

Or de manière inattendue, la courbe (C) de la figure 3 montre que dans les conditions précitées, en présence d'azote créant des groupements amine , le taux de greffage n'est pas dans la dépendance linéaire de la quantité des radicaux libres. La cinétique du greffage est très fortement accélérée dès le commencement de l'activation et pendant les premières minutes, du fait de la présence des groupements amine.

Il est donc possible d'obtenir un taux de greffage donné avec un temps d'activation plus court.

Dans le présent texte, le terme "traitement électrique" comprend à la fois des traitements électriques proprement dits, qui ne mettent en oeuvre que des courants électriques, et des traitements électromagnétiques - comme la décharge couronne et le plasma - qui mettent en oeuvre non seulement des courants électriques mais aussi des courants magnétiques.

## Revendications

1. Utilisation des groupements amine créés à la surface d'un matériau polymère par un traitement électrique sous atmosphère d'azote dans le but d'accélérer le greffage dudit matériau polymère par imprégnation de celui-ci par un bain contenant un monomère insaturé du type vinylique comportant un groupement carbonyle en a de la double liaison vinylique.

2. Utilisation selon la revendication 1 caractérisée en ce que le matériau polymère est en polypropylène.

3. Utilisation selon la revendication 1 caractérisée en ce que le traitement électrique est un plasma froid sous atmosphère d'azote.

4. Utilisation selon la revendication 3 caractérisée en ce que le traitement électrique est réalisé dans les conditions suivantes : puissance de la décharge de 30 à 100 W, durée de l'exposition du matériau polymère placé dans la partie visible du plasma de 1,5 à 3 mn.

5. Utilisation selon la revendication 1 caractérisée en ce que le monomère insaturé est un monomère acrylique.

6. Utilisation selon la revendication 5 caractérisée en ce que la réaction de greffage se déroule à une température comprise entre 70 ° et 95 ° C pendant des temps compris entre 24 et 48 heures.
